# EUROPEAN PATENT APPLICATION

(11) **EP 4 618 187 A1**
(43) Date of publication of application: **17.09.2025**
(21) Application number: 23929164.4
(22) Date of filing: 28.03.2023
(51) Int. Cl.: H01M 4/36, H01M 4/505, H01M 4/525

(54) **POSITIVE ELECTRODE MATERIAL, POSITIVE ELECTRODE SHEET, BATTERY CELL, BATTERY AND ELECTRICAL APPARATUS**

(71) Applicant: Contemporary Amperex Technology (Hong Kong) Limited, Central (HK)
(72) Inventor: LI, Zhenhua, Ningde, Fujian 352100 (CN); FU, Hanli, Ningde, Fujian 352100 (CN); ZHU, Jiazhe, Ningde, Fujian 352100 (CN); LI, Xing, Ningde, Fujian 352100 (CN); ZHANG, Yu, Ningde, Fujian 352100 (CN); NIU, Shaojun, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/084334
(87) International publication number: WO 2024/197564

(57) **Abstract**

Embodiments of this application provide a positive electrode material, a positive electrode plate, a battery cell, a battery, and an electric apparatus, and pertain to the field of battery technologies. The positive electrode material includes a layered lithium-containing metal oxide, and the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0≤b<1, 0≤c<1, 0≤d<1, 0<b+c+d≤1, 0<e≤2, 0≤f<2, and 0<x≤0.8. The technical solutions provided in the embodiments of this application help to improve performance of the positive electrode material and performance of the battery cell.

## Description

### TECHNICAL FIELD

This application relates to the field of battery technologies, and in particular, to a positive electrode material, a positive electrode plate, a battery cell, a battery, and an electric apparatus.

### BACKGROUND

As environmental pollution becomes increasingly serious, the new energy industry has attracted growing attention. For the new energy industry, battery technologies are an important factor in its development.

Performance of the positive electrode material, which is used to prepare a positive electrode plate of a battery cell, is crucial for the performance of the battery cell. Therefore, how to provide a positive electrode material to improve the performance of the battery cell is a pressing technical challenge that needs to be addressed.

### SUMMARY

This application has been made in view of the preceding issue and is intended to provide a positive electrode material, so as to improve performance of a battery cell.

To achieve the foregoing objective, this application provides a positive electrode material, a positive electrode plate, a battery cell, a battery, and an electric apparatus.

According to a first aspect, a positive electrode material is provided. The positive electrode material includes a layered lithium-containing metal oxide, and the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0≤b<1, 0≤c<1, 0≤d<1, 0<b+c+d≤1, 0<e≤2, 0≤f<2, and 0<x≤0.8.

An embodiment of this application provides a positive electrode material, where the positive electrode material includes a layered lithium-containing metal oxide, and the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0≤b<1, 0≤c<1, 0≤d<1, 0<b+c+d≤1, 0<e≤2, 0≤f<2, and 0<x≤0.8. When lithium ions are deintercalated from the positive electrode material, because the radius of the L ion is larger than the radius of the lithium ion, a Coulombic interaction range of the L ion having the larger radius is larger than a Coulombic interaction range of the lithium ion. This can weaken electrostatic repulsion between oxygen layers after the lithium ions are deintercalated, and suppress phenomena such as atomic misalignment and oxygen ion sliding caused by the vacancies generated due to lithium ion deintercalation. Consequently, this can reduce the risk of structural collapse of the positive electrode material, and help to improve structural stability of the positive electrode material. Moreover, because the radius of the L ion is larger than the radius of the lithium ion, a spacing between the oxygen layers may be widened to some extent, to provide more space for releasing stress generated in the charge/discharge process of the battery cell, thereby reducing the risk of stress-induced cracking and oxidation of the positive electrode material. This helps to improve the stability of the positive electrode material. Herein, 0<x≤0.8. This ensures that when the positive electrode material is applied to the battery cell, the battery cell can have a high energy density while the stability of the positive electrode material is improved. Therefore, the technical solution of this embodiment of this application can improve the structural stability of the positive electrode material and the performance of the battery cell.

In a possible implementation, 0.001≤x≤0.5, optionally, 0.001≤x≤0.1. In this way, the battery cell can have a higher energy density while the stability of the positive electrode material is improved.

In a possible implementation, 0<c<0.5. In this way, this helps to improve the stability of the layered structure of the positive electrode material and the cycling performance of the battery cell, and also helps to reduce preparation costs of the positive electrode material.

In a possible implementation, 0.3≤b≤0.96. In this way, an amount of Ni in the positive electrode material is appropriately set, helping to appropriately set the amount of Co in the positive electrode material, and to improve the stability of the layered structure of the positive electrode material.

In a possible implementation, 0<d≤0.3. In this way, an amount of Mn in the positive electrode material is appropriately set, helping to appropriately set the amount of Co in the positive electrode material, and to improve the stability of the layered structure of the positive electrode material.

In a possible implementation, the L ions occupy at least part of lithium sites in the layered lithium-containing metal oxide, and sites of the Li ions in the layered lithium-containing metal oxide are the lithium sites.

In the structure of the layered lithium-containing metal oxide, all elements are on respective arranged sites. In the structure of the layered lithium-containing metal oxide, sites of lithium ions are lithium sites, and the L ions occupy at least part of the lithium sites in the structure of the layered lithium-containing metal oxide. The L ion has a large radius, stably occupying the lithium site. This helps to reduce alternative arrangement of lithium and nickel ions, thereby helping to improve the stability of the layered structure.

In a possible implementation, an element of the L ion includes at least one of an alkali metal element, an alkaline earth metal element, a transition metal element, and another main-group metal element, excluding the lithium element. In this way, it is convenient to select a suitable element for doping according to an actual need.

In a possible implementation, the alkali metal element includes at least one of Na, K, Rb, and Cs; the alkaline earth metal element includes at least one of Mg, Ca, and Sr; the transition metal element includes Y; and the another main-group metal element includes Bi.

In the foregoing technical solution, doping of the foregoing elements is simple, facilitating the preparation of the positive electrode material; additionally, doping the positive electrode material with sodium ions, potassium ions, rubidium ions, caesium ions, and the like helps to improve the stability of the positive electrode material.

In a possible implementation, a service voltage V of the positive electrode material satisfies V=kx, where 0<k<100. In this way, it is convenient to appropriately set the value of y based on the required positive electrode material to meet the requirement of the positive electrode material for the working voltage.

In a possible implementation, a Poisson's ratio S of the positive electrode material is less than 0. In this way, this helps to improve the stability of the positive electrode material and also increase the service voltage of the battery cell.

In a possible implementation, the Poisson's ratio S of the positive electrode material satisfies -2<S<0, optionally, -0.2≤S≤-0.05. This allows the positive electrode material to have high stability, and also helps to increase the service voltage of the battery cell, thereby increasing the energy density of the battery cell.

In a possible implementation, the service voltage V of the positive electrode material satisfies V=-TS, where 0<T<100. In this way, it is convenient to appropriately set the value of S based on the required positive electrode material to meet the requirement of the positive electrode material for the working voltage.

According to a second aspect, this application provides a positive electrode plate, including the positive electrode material according to the first aspect and any one of the possible implementations of the first aspect.

According to a third aspect, this application provides a battery cell, including the positive electrode plate according to the second aspect.

In a possible implementation, a service voltage of the battery cell is 2 V to 5 V, optionally, 4.4 V to 5 V. This helps to improve the energy density of the battery cell.

According to a fourth aspect, this application provides a battery, including the battery cell according to the third aspect and any one of the possible implementations of the third aspect.

According to a fifth aspect, this application provides an electric apparatus, including the battery according to the fourth aspect.

This application provides a positive electrode material. The positive electrode material includes a layered lithium-containing metal oxide, and the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0<b≤0.96, 0<c<1, 0<d<1, 0<b+c+d≤1, 0<e≤2, 0≤f<2, and 0<x≤0.8. When lithium ions are deintercalated from the positive electrode material, because the radius of the L ion is larger than the radius of the lithium ion, a Coulombic interaction range of the L ion having the larger radius is larger than a Coulombic interaction range of the lithium ion. This can weaken electrostatic repulsion between oxygen layers after the lithium ions are deintercalated, and suppress phenomena such as atomic misalignment and oxygen ion sliding caused by the vacancies generated due to lithium ion deintercalation. Consequently, this can reduce the risk of structural collapse of the positive electrode material, and help to improve structural stability of the positive electrode material. Moreover, because the radius of the L ion is larger than the radius of the lithium ion, a spacing between the oxygen layers may be widened to some extent, to provide more space for releasing stress generated in the charge/discharge process of the battery cell, thereby reducing the risk of stress-induced cracking and oxidation of the positive electrode material. This helps to improve the stability of the positive electrode material. Herein, 0<x≤0.8. This ensures that when the positive electrode material is applied to the battery cell, the battery cell can have a high energy density while the stability of the positive electrode material is improved. Therefore, the technical solutions of this application can improve performance of the positive electrode material and performance of the battery cell.

### BRIEF DESCRIPTION OF DRAWINGS

FIG. 1 is a schematic diagram of a battery cell according to an embodiment of this application;
FIG. 2 is a schematic diagram of a battery module according to an embodiment of this application;
FIG. 3 is a schematic diagram of a battery according to an embodiment of this application; and
FIG. 4 is a schematic diagram of an electric apparatus according to an embodiment of this application.

### DESCRIPTION OF EMBODIMENTS

The following specifically discloses embodiments of a positive electrode material, a positive electrode plate, a battery cell, a battery, and an electric apparatus of this application with appropriate reference to detailed descriptions of accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, all the steps in this application can be performed sequentially or randomly, preferably, performed sequentially. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise stated, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Performance of the positive electrode material, which is used to prepare a positive electrode plate of a battery cell, is crucial for the performance of the battery cell. The positive electrode materials can be mainly classified into three categories based on structures: layered oxides, such as LiMO₂, where M includes at least one of Co, Ni, and Mn; spinel-structured oxides, such as LiMn₂O₄; and olivine-structured oxides, such as LiFePO₄. The layered positive electrode material is widely used due to its high specific energy, high specific capacity, and other properties. In the layered positive electrode material, each metal oxide layer has two oxygen atom planes, with transition metal atoms occupying gaps. Lithium ions are intercalated in the gaps between the metal oxide layers, forming an atom-thick lithium layer. During a charge/discharge process of a battery cell, lithium ions can make two-dimensional movements in a plane where the lithium ions are located, allowing for deintercalation and intercalation of the lithium ions.

Currently, a service voltage of the layered positive electrode material is low, leading to limited improvement in an energy density of the battery cell. In some treatment manners, the energy density of the battery cell can be increased by increasing the charge/discharge voltage (which may also be referred to as the service voltage) of the battery cell. However, when the charge/discharge voltage of the battery cell is high, on the one hand, a quantity of lithium ions in the positive electrode material is small during charge of the battery cell, resulting in a lithium-deficient state of the positive electrode material that may cause structural collapse of the positive electrode material, thereby affecting the performance of the battery cell; on the other hand, a stress generated during charge/discharge of the battery cell may lead to cracking of the positive electrode material, exacerbating oxidation of the positive electrode material and affecting the performance of the battery cell.

The applicant has discovered through research that doping the positive electrode material with cations having a radius larger than that of the lithium ion, while appropriately setting the amount of the cations for doping, can improve stability of the positive electrode material, thereby helping to improve the performance of the battery cell. In view of this, an embodiment of this application provides a positive electrode material including a layered lithium-containing metal oxide, where the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0≤b<1, 0≤c<1, 0≤d<1, 0<b+c+d≤1, 0<e≤2, 0≤f<2, and 0<x≤0.8. In this way, the stability of the positive electrode material can be improved, thereby helping to improve the performance of the battery cell.

### [Positive electrode material]

An embodiment of this application provides a positive electrode material, where the positive electrode material includes a layered lithium-containing metal oxide, and the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0≤b<1, 0≤c<1, 0≤d<1, 0<b+c+d≤1, 0<e≤2, 0≤f<2, and 0<x≤0.8.

The layered lithium-containing metal oxide may mean that a lithium-containing salt includes a metal element. For example, the layered lithium-containing metal oxide may be a lithium nickel cobalt manganese oxide. "Layered" may indicate that a crystal structure of the lithium-containing metal oxide is layered.

The L ion is a cation having a radius larger than the radius of the lithium ion. In this way, when the lithium ions are deintercalated from the positive electrode material, because the radius of the L ion is larger than the radius of the lithium ion, a Coulombic interaction range of the L ion having the larger radius is larger than a Coulombic interaction range of the lithium ion. This can weaken electrostatic repulsion between the oxygen layers after the lithium ions are deintercalated, and suppress phenomena such as atomic misalignment and oxygen ion sliding caused by vacancies generated due to lithium ion deintercalation. Consequently, this can help to reduce the risk of structural collapse of the positive electrode material and improve structural stability of the positive electrode material. Moreover, because the radius of the L ion is larger than the radius of the lithium ion, a spacing between the oxygen layers can be widened to some extent, to provide more space for releasing stress generated in the charge/discharge process of the battery cell, thereby reducing the risk of stress-induced cracking and oxidation of the positive electrode material. This helps to improve the stability of the positive electrode material.

Herein, 0≤b<1, 0≤c<1, 0≤d<1, and 0<b+c+d≤1. For example, b is 0, 0.1, 0.3, 0.5, 0.9, or any value in the foregoing range; c is 0, 0.1, 0.3, 0.5, 0.9, or any value in the foregoing range; and d is 0, 0.1, 0.3, 0.5, 0.9, or any value in the foregoing range. This is not limited in this embodiment of this application as long as the foregoing conditions are met. In this embodiment of this application, not all of b, c, and d are 0, but one or two of the three may be 0. For example, the layered lithium-containing metal oxide may be Li_{0.5}Na_{0.5}NiO₂, Li_{0.5}Na_{0.5}CoO₂, Li_{0.5}Na_{0.5}MnO₂, Li_{0.5}Na_{0.5}Ni_{0.9}Al_{0.1}O₂, or the like.

M includes at least one of Mg, Zr, Al, B, Ta, Mo, W, Nb, Sb, and La, where 0<b+c+d≤1. In a case that b+c+d<1, the layered lithium-containing metal oxide includes the M element, and the layered lithium-containing metal oxide may have higher stability. In a case that b+c+d=1, the layered lithium-containing metal oxide does not include the M element, and the layered lithium-containing metal oxide may be represented by a general formula LiₐLₓNi_{b}Co_{c}Mn_{d}OₑN_{f}.

It may be understood that sites of the M ions in the structure of the layered lithium-containing metal oxide may be sites where part of transition metals are replaced. For example, in a case that the layered lithium-containing metal oxide is a nickel-cobalt-manganese ternary material, the M ions may replace part of manganese, nickel, or cobalt sites.

N includes at least one of F, S, and P, where 0≤f<2. For example, f is 0, 0.5, 1, 1.5, or any value in the foregoing range. In a case that f=0, the layered lithium-containing metal oxide does not include the N element, and the layered lithium-containing metal oxide may be represented by a general formula LiₐLₓNi_{b}Co_{c}Mn_{d}M_{(1-b-c-d)}Oₑ.

It may be understood that sites of the N ions in the structure of the layered lithium-containing metal oxide may be sites where part of O ions are replaced. Optionally, e+f=2.

Herein, 0<a<2. The value of a may be flexibly set based on a capacity of a required battery cell. For example, a is 0.9, 1, 1.2, 1.5, 1.8, or any value in the foregoing range. In a case that a is greater than 1, the layered lithium-containing metal oxide may be a lithium-rich metal oxide. This can help to increase the amount of active lithium in the positive electrode material, thereby helping to improve the capacity of the battery cell.

Herein, 0<x≤0.8. For example, x is 0.001, 0.005, 0.1, 0.5, 0.6, 0.8, or any value in the foregoing range. On the one hand, x being greater than 0 means that the layered lithium-containing metal oxide includes L ions, helping to improve the stability of the positive electrode material. On the other hand, x≤0.8, and the amount of L ions is within an appropriate range, preventing a small amount of lithium ions caused by an excessively large amount of L ions. This ensures that the battery cell can exhibit suitable cycling performance while maintaining a high energy density.

It should be noted that the general formula of the layered lithium-containing metal oxide provided in this embodiment of this application is a general formula for an ideal state. The ideal state may include a state in which the layered lithium-containing oxide added during the preparation of the positive electrode material satisfies the foregoing general formula. However, after the battery cell is prepared by using the positive electrode material, due to various factors such as deintercalation of the lithium ions or consumption of the lithium ions, an actual amount of the lithium ions may be smaller than that indicated by the general formula. Similarly, an actual amount of oxygen ions may also be smaller. For example, in a case that the layered lithium-containing oxide is Li_{0.5}Na_{0.5}NiO₂, an actual tested general formula may be Li_{0.5+e}Na_{0.5+g}NiO_{2+f}, where e<0, g<0, and f<0.

In this embodiment of this application, the positive electrode material may be used as a positive electrode active material, for example, it may be mixed with a binder, a conductive agent, and a corresponding solvent to prepare a slurry that is then applied onto a positive electrode current collector to prepare a positive electrode plate.

An embodiment of this application provides a positive electrode material, where the positive electrode material includes a layered lithium-containing metal oxide, and the layered lithium-containing metal oxide is represented by a general formula LiₐLₓNi_{b}Co_{c}Mn_{d}M_{(1-b-c-d)}OₑN_{f}, where an L ion is a cation having a radius larger than a radius of a Li ion, M includes at least one of Mg, Zr, Al, B, Ta, Mo, W, Nb, Sb, and La, and N includes at least one of F, S, and P, where 0<a<2, 0≤b<1, 0≤c<1, 0≤d<1, 0<b+c+d≤1, 0<e≤2, 0≤f<2, and 0<x≤0.8. When lithium ions are deintercalated from the positive electrode material, because the radius of the L ion is larger than the radius of the lithium ion, a Coulombic interaction range of the L ion having the larger radius is larger than a Coulombic interaction range of the lithium ion. This can weaken electrostatic repulsion between oxygen layers after the lithium ions are deintercalated, and suppress phenomena such as atomic misalignment and oxygen ion sliding caused by the vacancies generated due to lithium ion deintercalation. Consequently, this can reduce the risk of structural collapse of the positive electrode material, and help to improve structural stability of the positive electrode material. Moreover, because the radius of the L ion is larger than the radius of the lithium ion, a spacing between the oxygen layers may be widened to some extent, to provide more space for releasing stress generated in the charge/discharge process of the battery cell, thereby reducing the risk of stress-induced cracking and oxidation of the positive electrode material. This helps to improve the stability of the positive electrode material. Herein, 0<x≤0.8. This ensures that when the positive electrode material is applied to the battery cell, the battery cell can exhibit high cycling performance while the stability of the positive electrode material is improved. Therefore, the technical solution of this application can improve the structural stability of the positive electrode material and the performance of the battery cell.

In some embodiments, 0.001≤x≤0.5. In this way, the positive electrode material has high stability, and the battery cell has a high service voltage and exhibits good cycling performance.

Alternatively, 0.001≤x≤0.1. In this way, the battery cell has a high service voltage and exhibits good cycling performance.

In some embodiments, 0<a<1, and a+x=1. In this way, a positive electrode material that satisfies the proportional relationship can be easily prepared and obtained, helping to reduce production costs.

In some embodiments, 0<c<0.5. In this way, an amount of Co in the positive electrode material is appropriately set. This helps to improve the stability of the layered structure of the positive electrode material and the cycling performance of the battery cell, and also helps to reduce the preparation costs of the positive electrode material.

In some embodiments, 0.3<b≤0.96. In this way, an amount of Ni in the positive electrode material is appropriately set, helping to appropriately set the amount of Co in the positive electrode material, and to improve the stability of the layered structure of the positive electrode material.

In some embodiments, 0<d≤0.3. In this way, an amount of Mn in the positive electrode material is appropriately set, helping to appropriately set the amount of Co in the positive electrode material, and to improve the stability of the layered structure of the positive electrode material.

In some embodiments, 0.3<b≤0.96, 0<c<0.5, and 0<d≤0.3. The amounts of Ni, Co, and Mn in the positive electrode material are appropriately set, helping to ensure the service voltage and the cycling performance of the battery cell.

In some embodiments, the L ions occupy at least part of lithium sites in the layered lithium-containing metal oxide, and sites of the Li ions in the layered lithium-containing metal oxide are the lithium sites.

In the structure of the layered lithium-containing metal oxide, all elements are on respective arranged sites. In the structure of the layered lithium-containing metal oxide, sites of the lithium ions are lithium sites, and the L ions occupy at least part of the lithium sites in the structure of the layered lithium-containing metal oxide. The L ion has a large radius, stably occupying the lithium site. This helps to reduce alternative arrangement of lithium and nickel ions, thereby helping to improve the stability of the layered structure.

In some embodiments, an element of the L ion includes at least one of an alkali metal element, an alkaline earth metal element, a transition metal element, and another main-group metal element, excluding the lithium element. In this way, it is convenient to select a suitable element for doping according to an actual need.

In some embodiments, the alkali metal element includes at least one of Na, K, Rb, and Cs; the alkaline earth metal element includes at least one of Mg, Ca, and Sr; the transition metal element includes Y; and the another main-group metal element includes Bi.

Doping of the foregoing elements is simple, facilitating the preparation of the positive electrode material; additionally, doping the positive electrode material with sodium ions, potassium ions, rubidium ions, caesium ions, and the like helps to improve the stability of the positive electrode material.

In some embodiments, a service voltage V of the positive electrode material satisfies V=kx, where 0<k<100.

Both k and voltage V are measured in volt v, where a value of k may be determined based on the voltage V and an amount y of the L ions.

The service voltage of the positive electrode material can be understood as a voltage of the battery cell on which a positive electrode plate prepared with the positive electrode material is applied. The voltage may be understood as a charge/discharge voltage of the battery cell, and in some cases, it may be understood as an upper limit or a lower limit of the charge/discharge voltage of the battery cell.

A higher voltage of the battery cell means a larger number of lithium ions deintercalated from the positive electrode material, which increases the possibility of structural change in the positive electrode material. The service voltage V of the positive electrode material and the amount y of the L ions satisfy a certain relationship. Because y is appropriately set, the requirement for the working voltage V can be satisfied while high structural stability of the positive electrode material is maintained.

In the foregoing embodiment, it is convenient to appropriately set the value of y based on the required positive electrode material to meet the requirement of the positive electrode material for the working voltage.

In some embodiments, a Poisson's ratio S of the positive electrode material is less than 0.

For the positive electrode material provided in this embodiment of this application, the Poisson's ratio S of the positive electrode material being less than 0 means that when the positive electrode material is stretched in a direction of lithium ion deintercalation, the positive electrode material swells in a direction perpendicular to the direction of lithium ion deintercalation; and when the positive electrode material is compressed in the direction of lithium ion deintercalation, the positive electrode material contracts in the direction perpendicular to the direction of lithium ion deintercalation. In other words, when a size of the positive electrode material increases in one direction, sizes of the positive electrode material in other two directions perpendicular to the foregoing direction decrease.

The Poisson's ratio S of the positive electrode material may refer to the Poisson's ratio of a lattice structure of the positive electrode material.

In the continuous charge/discharge process of the battery cell, a stress is generated. When the battery cell is in a high voltage state, the positive electrode material is in a lithium-deficient state, and the resulting large stress may cause the positive electrode material to crack. The cracked positive electrode material is easily oxidized, affecting the performance of the battery cell. The Poisson's ratio S of the positive electrode material in this application is less than 0. When the structure of the positive electrode material is stretched in the direction of lithium ion deintercalation, because the Poisson's ratio S of the positive electrode material is less than 0, the positive electrode material does not contract in the direction perpendicular to the direction of lithium ion deintercalation, thereby reducing the possibility of cracking of the positive electrode material and subsequently reducing the possibility of oxidization of the positive electrode material.

In the foregoing embodiment, the Poisson's ratio S of the positive electrode material is less than 0. This helps to improve the stability of the positive electrode material and also increase the service voltage of the battery cell.

In some embodiments, the Poisson's ratio S of the positive electrode material satisfies -2<S<0, optionally, -0.2≤S≤-0.05. This allows the positive electrode material to have high stability, and also helps to increase the service voltage of the battery cell, thereby increasing the energy density of the battery cell.

In some embodiments, the service voltage V of the positive electrode material satisfies V=-TS, where 0<T<100.

Both T and voltage V are measured in volt v, where a value of T may be determined based on the service voltage V and the Poisson's ratio S of the positive electrode material.

The service voltage V of the positive electrode material is related to the Poisson's ratio S of the positive electrode material. In the foregoing embodiment, it is convenient to appropriately set the value of S based on the service voltage of the required positive electrode material to meet the requirement of the positive electrode material for the working voltage.

### [Positive electrode plate]

An embodiment of this application provides a positive electrode plate, including the positive electrode material described in the foregoing embodiment.

In some embodiments, the positive electrode plate includes a positive electrode current collector and a coating applied on the positive electrode current collector, where the coating includes the positive electrode material described in the foregoing embodiment.

In some embodiments, the coating includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the coating includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode current collector may be a metal foil current collector or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, a matrix of polypropylene (PP), polyethylene terephthalate (PET), polybutylene terephthalate (PBT), polystyrene (PS), or polyethylene (PE)).

### [Battery cell]

An embodiment of this application provides a battery cell, including the positive electrode plate described in the foregoing embodiment.

The battery cell is not limited to any particular shape in this embodiment of this application, and may be cylindrical, rectangular, or of any other shapes.

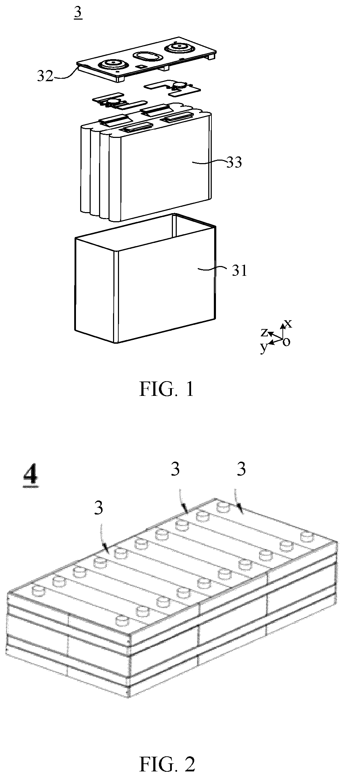

FIG. 1 is a schematic diagram of a battery cell according to an embodiment of this application. As shown in FIG. 1, a battery cell 3 includes a shell 31, a cover plate 32, and an electrode assembly 33 provided in the shell 31.

The electrode assembly 33 may be made from a positive electrode plate, a negative electrode plate, and a separator provided in the embodiments of this application through winding or lamination.

Optionally, the battery cell 3 further includes an electrolyte. The electrolyte may be in a solid state, semi-solid state, or liquid state. This is not specifically limited in this embodiment of this application.

In some embodiments, the battery cell may be assembled into a battery module, and the battery module may include one or more battery cells. The specific quantity may be chosen by persons skilled in the art based on the use and capacity of the battery module.

FIG. 2 is a schematic diagram of a battery module according to an embodiment of this application. Refer to FIG. 2. In the battery module 4, a plurality of battery cell 3 may be sequentially arranged in a length direction of the battery module 4. Certainly, a different arrangement manner may be used. Further, the plurality of battery cells 3 may be fastened through fasteners.

Optionally, the battery module 4 may further include a housing with an accommodating space, and the plurality of battery cells 3 are accommodated in the accommodating space.

In some embodiments, a service voltage of the battery cell is 2 V to 5 V, optionally, 4.4 V to 5 V. This helps to improve the energy density of the battery cell.

When the service voltage of the battery cell is high, for example, greater than 4.4 V, the positive electrode material has high stability, and therefore the original structure can be maintained. Furthermore, the service voltage of the battery cell is related to the energy density of the battery cell. A higher service voltage further helps to increase the energy density of the battery cell. In this way, the battery cell can have a high service voltage. This helps to increase the energy density of the battery cell.

### [Battery]

An embodiment of this application provides a battery, including the battery cell according to the foregoing embodiments.

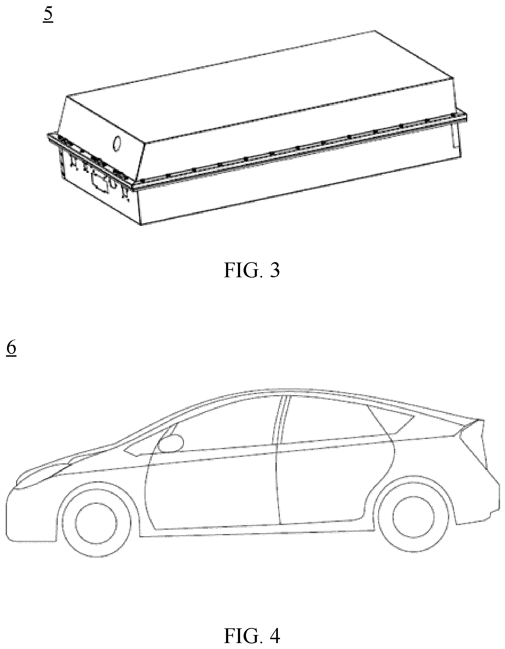

FIG. 3 is a schematic diagram of a battery according to an embodiment of this application. As shown in FIG. 3, this application provides a battery 5, including the battery cell 3 according to any one of the foregoing embodiments.

The plurality of battery cells 3 may be directly assembled into the battery 5, or may first be assembled into battery modules which are then assembled into the battery 5.

### [Electric apparatus]

An embodiment of this application provides an electric apparatus, including the battery according to the foregoing embodiment.

FIG. 4 is a schematic diagram of an electric apparatus according to an embodiment of this application. As shown in FIG. 4, this application provides an electric apparatus 6, including the battery 5 according to the foregoing embodiment.

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### [Example]

### Example 1

In Example 1, the positive electrode material is represented by the general formula Li_{0.5}Na_{0.5}Ni_{0.5}Co_{0.2}Mn_{0.3}O₂. The preparation method is as follows. In Example 1, a is 0.5, and x is 0.5.

(1) Nickel acetate, cobalt acetate, and manganese acetate were added to deionized water in a stoichiometric ratio, and stirred to uniformity to obtain a transition metal salt solution. (2) The sodium carbonate solution was quickly poured into the above transition metal salt solution; the reaction continued for 9 h; and the solution was left standing for 4 h for aging, to obtain grown primary particles. (3) The primary particles were washed three times with the deionized water, dried in an air drier, and then vacuum dried at 100°C for 12 h. The dried solid was collected and used as the precursor. (4) The precursor was mixed to uniformity with lithium carbonate and sodium carbonate in a molar ratio of 1:0.535:0.535, and grind was performed (the excessive lithium carbonate was used to compensate for lithium loss during high-temperature calcination). (5) The thoroughly ground solid powder was transferred to a crucible and calcined in a temperature-programmed muffle furnace. The calcination procedure was as follows. (6) The temperature was raised from the room temperature to 500°C for pre-calcination for 5 h, and then further increased to 800°C for calcination for 12 h at the temperature rise speed of 3°Cmin⁻¹. After the powder was cooled to the room temperature, the foregoing positive electrode material was obtained.

### Example 2

In Example 2, the positive electrode material is represented by a general formula Li_{0.4}Na_{0.6}Ni_{0.5}Co_{0.2}Mn_{0.3}O₂. In Example 2, a is 0.4, and x is 0.6.

The preparation method in Example 2 is generally the same as that in Example 1, except for the molar ratio in step (4). In Example 2, the precursor was mixed with lithium carbonate and sodium carbonate in a molar ratio of 1:0.428:0.642.

### Example 3

In Example 3, the positive electrode material is represented by the general formula Li_{0.3}Na_{0.7}Ni_{0.5}Co_{0.2}Mn_{0.3}O₂. In Example 3, a is 0.3, and x is 0.7.

The preparation method in Example 3 is generally the same as that in Example 1, except for the molar ratio in step (4). In Example 3, the precursor was mixed with lithium carbonate and sodium carbonate in a molar ratio of 1:0.321:0.749.

### Example 4

In Example 4, the positive electrode material is represented by a general formula Li_{0.2}Na_{0.8}Ni_{0.5}Co_{0.2}Mn_{0.3}O₂. In Example 4, a is 0.2, and x is 0.8.

The preparation method in Example 4 is generally the same as that in Example 1, except for the molar ratio in step (4). In Example 3, the precursor was mixed with lithium carbonate and sodium carbonate in a molar ratio of 1:0.214:0.856.

### Example 5

In Example 5, the positive electrode material is represented by a general formula Li_{0.9}Na_{0.1}Ni_{0.5}Co_{0.2}Mn_{0.3}O₂. In Example 5, a is 0.9, and x is 0.1.

The preparation method in Example 5 is generally the same as that in Example 1, except for the molar ratio in step (4). In Example 5, the precursor was mixed with lithium carbonate and sodium carbonate in a molar ratio of 1:0.963:0.107.

### Example 6

In Example 6, the positive electrode material is represented by a general formula Li_{0.99}Na_{0.01}Ni_{0.5}Co_{0.2}Mn_{0.3}O₂. In Example 6, a is 0.99, and x is 0.01.

The preparation method in Example 6 is generally the same as that in Example 1, except for the molar ratio in step (4). In Example 6, the precursor was mixed with lithium carbonate and sodium carbonate in a molar ratio of 1:1.056:0.011.

### Example 7

In Example 7, the positive electrode material is represented by a general formula Li_{0.999}Na_{0.001}Ni_{0.5}Co_{0.2}Mn_{0.3}O₂. In Example 6, a is 0.999, and x is 0.001.

The preparation method in Example 7 is generally the same as that in Example 1, except for the molar ratio in step (4). In Example 7, the precursor was mixed with lithium carbonate and sodium carbonate in a molar ratio of 1:1.068:0.002.

### Examples 8 to 13

In Example 8, the positive electrode material is represented by a general formula Li_{0.5}Na_{0.5}Ni_{0.3}Co_{0.4}Mn_{0.3}O₂; in Example 9, the positive electrode material is represented by a general formula Li_{0.5}Na_{0.5}Ni_{0.4}Co_{0.3}Mn_{0.3}O₂; in Example 10, the positive electrode material is represented by a general formula Li_{0.5}Na_{0.5}Ni_{0.7}Co_{0.1}Mn_{0.2}O₂; in Example 11, the positive electrode material is represented by a general formula Li_{0.5}Na_{0.5}NiO₂. in Example 12, the positive electrode material is represented by a general formula Li_{0.5}Na_{0.5}CoO₂; and in Example 13, the positive electrode material is represented by a general formula Li_{0.5}Na_{0.5}MnO₂.

Examples 8 to 13 differ from Example 1 in the amounts of Co, Mn, and Ni.

### Example 14

In Example 14, the positive electrode material is represented by a general formula Li_{0.5}Na_{0.1}K_{0.2}Cs_{0.05}Rb_{0.15}Ni_{0.5}Co_{0.2}Mn_{0.3}O₂. In Example 14, a is 0.5, and x is 0.5.

The preparation method in Example 14 is generally the same as that in Example 1, except for the molar ratio in step (4). In Example 14, the precursor was mixed with lithium carbonate, sodium carbonate, potassium carbonate, caesium carbonate, and rubidium carbonate in a molar ratio of 1:0.535:0.107:0.216:0.0535:0.1605.

### Examples 15 to 20

In Example 15, the positive electrode material is represented by a general formula Li_{0.5}K_{0.5}Ni_{0.5}Co_{0.2}Mn_{0.3}O₂; in Example 16, the positive electrode material is represented by a general formula Li_{0.5}Rb_{0.5}Ni_{0.5}Co_{0.2}Mn_{0.3}O₂; in Example 17, the positive electrode material is represented by a general formula Li_{0.5}Cs_{0.5}Ni_{0.5}Co_{0.2}Mn_{0.3}O₂; in Example 18, the positive electrode material is represented by a general formula Li_{0.5}Mg_{0.5}Ni_{0.5}Co_{0.2}Mn_{0.3}O₂; in Example 19, the positive electrode material is represented by a general formula Li_{0.5}Y_{0.5}Ni_{0.5}Co_{0.2}Mn_{0.3}O₂; and in Example 20, the positive electrode material is represented by a general formula Li_{0.5}Bi_{0.5}Ni_{0.5}Co_{0.2}Mn_{0.3}O₂.

Examples 15 to 20 differ from Example 1 in the L element used for doping.

### Examples 21 to 23

In Example 21, the positive electrode material is represented by a general formula Li_{1.5}Na_{0.5}Ni_{0.5}Co_{0.2}Mn_{0.3}O₂; in Example 22, the positive electrode material is represented by a general formula Li_{1.2}Na_{0.8}Ni_{0.5}Co_{0.2}Mn_{0.3}O₂; and in Example 23, the positive electrode material is represented by a general formula Li_{0.8}Na_{0.8}Ni_{0.5}Co_{0.2}Mn_{0.3}O₂.

Examples 21 to 23 differ from Example 1 in the value of x+a.

In Examples 21 to 23, the molar ratios between the precursor, lithium carbonate, and sodium carbonate were respectively 1:1.605:0.535, 1:1.284:0.856, and 1:0.856:0.856.

### Examples 24 and 25

In Examples 24 and 25, the M element was used for doping.

In Example 24, the positive electrode material is represented by a general formula Li_{0.5}Na_{0.5}Ni_{0.5}Co_{0.2}Mn_{0.2}Al_{0.1}O₂. In Example 24, M was Al.

In Example 25, the positive electrode material is represented by a general formula Li_{0.5}Na_{0.5}Ni_{0.5}Co_{0.2}Mn_{0.2}Mg_{0.1}O₂. In Example 25, M was Mg.

### Comparative example 1

In Comparative example 1, the positive electrode material is represented by a general formula LiNi_{0.5}Co_{0.2}Mn_{0.2}Al_{0.1}O₂. In Comparative example 1, the positive electrode material was not doped with the cation having a radius larger than the radius of the lithium ion.

### Comparative example 2

In Comparative example 2, the positive electrode material is represented by a general formula LiNi_{0.5}Co_{0.2}Mn_{0.3}O₂. In Comparative example 2, the positive electrode material was not doped with the cation having a radius larger than the radius of the lithium ion.

### [Preparation of positive electrode plate]

The foregoing positive electrode material, polyvinylidene fluoride binder, and carbon black conductive agent were mixed in a mass ratio of 90:5:5, with N-methylpyrrolidone used as the solvent. The amount of the added solvent was adjusted to control the slurry viscosity within 100 to 20,000 mPa.s. The slurry was then applied onto the positive electrode current collector with a coating machine or a spraying machine. Drying at 85°C was performed, followed by cold pressing, trimming, cutting, slitting, drying under a vacuum condition at 85°C for 4 hours, and tab joining, to prepare the required positive electrode plate of the battery cell.

### [Preparation of battery cell]

The positive electrode plate, the separator, and the negative electrode plate were stacked in order and wound, to obtain an electrode assembly. The electrode assembly was put into an outer package, and the electrolyte was added, followed by sealing, standing, formation, aging, and other processes, to obtain the battery cell.

### [Determination of general formula]

The general formula of the positive electrode material can be determined according to chemical analysis.

The components of the positive electrode material can be determined through analysis according to inductively coupled plasma (ICP) optical emission spectrometry. Reference can be made to YS/T 1006.2-2014, GB/T 23367.2-2009, or YS/T 1028.5-2015. For example, measurement may be performed with inductively coupled plasma emission spectrometer in this embodiment of this application. Optionally, amounts of metal elements in the sample may alternatively be determined through gravimetric analysis and ethylenediaminetetraacetic acid (EDTA) complexometric titration.

### [Test for Poisson's ratio]

The Poisson's ratio of the positive electrode material can be determined in the following manner.

A laser beam was directed onto the surface of the positive electrode plate (or positive electrode material powder) to excite the surface acoustic wave. In acoustic microscopy, the incident acoustic wave is propagated by a medium to a material surface to excite the surface acoustic wave. According to the classical elastic wave propagation theory, the approximate relationship between the surface Rayleigh wave velocity v_{R} and the elasticity coefficient was v_{R}=(C₁₁/ρ)^{1/2}[(2.87C₁₁-4C₄₄)/3(C₁₁-4C₄₄)], where C₁₁=G(E-4G)/(E-3G), C₄₄=G, C₁₁ and C₄₄ were two independent elasticity coefficient components, and ρ was the thin layer density of the material. Fitting was performed with different values of C₁₁ and C₄₄ to obtain the optimal values of C₁₁ and C₄₄. Based on the optimal values of C₁₁ and C₄₄, the values of E and G can be deduced. The Poisson's ratio of the material can be calculated according to the general formula G=E/[2(1+S)], where the elastic modulus E (or Young's modulus), the shear modulus G, and the Poisson's ratio S described an elastic behavior of the material.

### [Test for upper limit of working voltage of battery cell]

Cyclic voltammetry was used in the test. During the test, the measurement voltage range was continuously increased while the current was kept constant at 0.1C, to obtain a graph indicating the relationship between the voltage range and the current. The upper voltage limit of the voltage range where a sudden change occurred was an upper limit of the working voltage of the battery cell.

### [Test for cycle life of battery cell]

A constant current charge/discharge device was used for a charge/discharge test on the battery at 25°C under the condition of 1C/1C, to determine cycles of the battery cell at 80% SOH.

### [Test for volumetric energy density]

At 25°C, the battery cell was charged to 4.35 V at a constant current of 0.33C, then charged to a current less than 0.05C at a constant voltage of 4.35 V, and discharged to 2.8 V at a current of 0.33C. Then discharge energy E was determined. Three-dimensional coordinate method was used to measure (a coordinate measuring machine may be used for measurement) a size of the battery cell. A volume V was calculated.

### Volumetric energy density K=E/V.

Table 1 shows experimental results of examples and comparative examples. Refer to Table 1 for specific data.

**Table 1 Experimental results of examples and comparative examples**

| | General formula LiₐLₓNi_{b}Co_{c}Mn_{d}M_{(1-b-c-d)}O_{c}N_{f} | x+a | a | x | b | c | d | S | V/v | Cycle life (cycles) | Energy density (Wh/L) |
|---|---|---|---|---|---|---|---|---|---|---|---|
| Example 1 | Li_{0.5}Na_{0.5}Ni_{0.5}Co_{0.2}Mn_{0.3}O₂ | 1 | 0.5 | 0.5 | 0.5 | 0.2 | 0.3 | -0.05 | 4.4 | 2050 | 220 |
| Example 2 | Li_{0.4}Na_{0.6}Ni_{0.5}Co_{0.2}Mn_{0.3}O₂ | 1 | 0.4 | 0.6 | 0.5 | 0.2 | 0.3 | -0.1 | 4.5 | 1950 | 225 |
| Example 3 | Li_{0.3}Na_{0.7}Ni_{0.5}Co_{0.2}Mn_{0.3}O₂ | 1 | 0.3 | 0.7 | 0.5 | 0.2 | 0.3 | -0.2 | 4.6 | 2000 | 230 |
| Example 4 | Li_{0.2}Na_{0.8}Ni_{0.5}Co_{0.2}Mn_{0.3}O₂ | 1 | 0.2 | 0.8 | 0.5 | 0.2 | 0.3 | -0.35 | 4.65 | 1940 | 232 |
| Example 5 | Li_{0.9}Na_{0.1}Ni_{0.5}Co_{0.2}Mn_{0.3}O₂ | 1 | 0.9 | 0.1 | 0.5 | 0.2 | 0.3 | -0.02 | 4.45 | 1600 | 221 |
| Example 6 | Li_{0.99}Na_{0.01}Ni_{0.3}Co_{0.2}Mn_{0.3}O₂ | 1 | 0.99 | 0.01 | 0.5 | 0.2 | 0.3 | -0.002 | 4.23 | 1300 | 190 |
| Example 7 | Li_{0.999}Na_{0.001}Ni_{0.3}Co_{0.2}Mn_{0.3}O₂ | 1 | 0.999 | 0.001 | 0.5 | 0.2 | 0.3 | -0.0008 | 4.21 | 1000 | 185 |
| Example 8 | Li_{0.5}Na_{0.5}Ni_{0.3}Co_{0.4}Mn_{0.3}O₂ | 1 | 0.5 | 0.5 | 0.3 | 0.4 | 0.3 | -0.05 | 4.5 | 2300 | 225 |
| Example 9 | Li_{0.5}Na_{0.5}Ni_{0.3}Co_{0.3}Mn_{0.3}O₂ | 1 | 0.5 | 0.5 | 0.4 | 0.3 | 0.3 | -0.05 | 4.5 | 2400 | 225 |
| Example 10 | Li_{0.5}Na_{0.5}Ni_{0.7}Co_{0.1}Mn_{0.2}O₂ | 1 | 0.5 | 0.5 | 0.7 | 0.1 | 0.2 | -0.05 | 4.4 | 1800 | 220 |
| Example 11 | Li_{0.5}Na_{0.5}NiO₂ | 1 | 0.5 | 0.5 | 1 | 0 | 0 | -0.05 | 4.25 | 1800 | 195 |
| Example 12 | Li_{0.5}Na_{0.5}CoO₂ | 1 | 0.5 | 0.5 | 0 | 1 | 0 | -0.05 | 4.4 | 2200 | 220 |
| Example 13 | Li_{0.5}Na_{0.3} MnO₂ | 1 | 0.5 | 0.5 | 0 | 0 | 1 | -0.05 | 4.4 | 2000 | 220 |
| Example 14 | Li_{0.5}Na_{0.1}K_{0.2}Cs_{0.05}Rb_{0.15}Ni_{0.5}Co_{0.2}Mn_{0.3}O₂ | 1 | 0.5 | 0.5 | 0.5 | 0.2 | 0.3 | -0.06 | 4.4 | 2000 | 219 |
| Example 15 | Li_{0.5}K _{0.5}Ni_{0.5}Co_{0.2}Mn_{0.3}O₂ | 1 | 0.5 | 0.5 | 0.5 | 0.2 | 0.3 | -0.05 | 4.4 | 1900 | 218 |
| Example 16 | Li_{0.5} Rb_{0.5}Ni_{0.5}Co_{0.2}Mn_{0.3}O₂ | 1 | 0.5 | 0.5 | 0.5 | 0.2 | 0.3 | -0.04 | 4.4 | 1850 | 222 |
| Example 17 | Li_{0.5}Cs_{0.5}Ni_{0.5}Co_{0.2}Mn_{0.3}O₂ | 1 | 0.5 | 0.5 | 0.5 | 0.2 | 0.3 | -0.07 | 4.4 | 1800 | 220 |
| Example 18 | Li_{0.5}Mg_{0.5}Ni_{0.5}Co_{0.2}Mn_{0.3}O₂ | 1 | 0.5 | 0.5 | 0.5 | 0.2 | 0.3 | -0.045 | 4.4 | 1760 | 219 |
| Example 29 | Li_{0.5}Y_{0.5}Ni_{0.5}Co_{0.2}Mn_{0.3}O₂ | 1 | 0.5 | 0.5 | 0.5 | 0.2 | 0.3 | -0.047 | 4.4 | 1820 | 220 |
| Example 20 | Li_{0.5}Bi_{0.5}Ni_{0.5}Co_{0.2}Mn_{0.3}O₂ | 1 | 0.5 | 0.5 | 0.5 | 0.2 | 0.3 | -0.060 | 4.4 | 1915 | 218 |
| Example 21 | Li_{1.5}Na_{0.5}Ni_{0.5}Co_{0.2}Mn_{0.3}O₂ | 2 | 1.5 | 0.5 | 0.5 | 0.2 | 0.3 | -0.2 | 4.45 | 2100 | 224 |
| Example 22 | Li_{1.2}Na_{0.8}Ni_{0.5}Co_{0.2}Mn_{0.3}O₂ | 2 | 1.2 | 0.8 | 0.5 | 0.2 | 0.3 | -0.25 | 4.5 | 2500 | 226 |
| Example 23 | Li_{0.8}Na_{0.8}Ni_{0.5}Co_{0.2}Mn_{0.3}O₂ | 1.6 | 0.8 | 0.8 | 0.5 | 0.2 | 0.3 | -0.3 | 4.55 | 2800 | 260 |
| Example 24 | Li_{0.5}Na_{0.5}Ni_{0.5}Co_{0.2}Mn_{0.2}Al_{0.1}O₂ | 1 | 0.5 | 0.5 | 0.5 | 0.2 | 0.2 | -0.05 | 4.41 | 2100 | 223 |
| Example 25 | Li_{0.5}Na_{0.5}Ni_{0.5}Co_{0.2}Mn_{0.2}Mg_{0.1}O₂ | 1 | 0.5 | 0.5 | 0.5 | 0.2 | 0.2 | -0.05 | 4.4 | 2160 | 220 |
| Comparative example 1 | LiNi_{0.5}Co_{0.2}Mn_{0.2}Al_{0.1}O₂ | / | 1 | / | 0.5 | 0.2 | 0.2 | 1.2 | 4.2 | 800 | 178 |
| Comparative example 2 | LiNi_{0.5}Co_{0.2}Mn_{0.3}O₂ | / | 1 | / | 0.5 | 0.2 | 0.3 | 1.2 | 4.2 | 700 | 178 |

An upper limit of the service voltage of the battery cell is related to the stability of the positive electrode material. Higher stability of the positive electrode material means a higher upper voltage limit of the battery cell, which helps to achieve a higher energy density of the battery cell.

Through comparison between Examples 1 to 23 and Comparative example 2 and between Example 24 and Comparative Example 1, it can be learned that, doping with the ions having a radius larger than the radius of the lithium ion, such as sodium ion, potassium ion, caesium ion, and rubidium ion, helps to increase the upper limit of the service voltage of the battery cell and also improve the cycling life of the battery cell.

As shown in Examples 1 to 7, the value of x is appropriately set. This helps to achieve the negative Poisson's ratio property of the positive electrode material, thereby allowing for a higher upper limit of an applicable service voltage of the battery cell; and when the value of y is small, a higher upper limit of the service voltage can be achieved.

As shown in Examples 8 to 13, the ratio of the Ni, Co, and Mn elements is appropriately set, helping to ensure the energy density, the upper limit of the service voltage, and the cycle life of the battery cell.

As shown in Examples 1, 24, and 25, the Al element is added to the positive electrode material, helping to improve the stability of the positive electrode material, thereby increasing the upper limit of the service voltage and cycle life of the battery cell.

As shown in Examples 14 to 20, the positive electrode material can be doped with various different ions. For example, the sodium ion, potassium ion, caesium ion, rubidium ion, or a combination of these ions may be used for doping, to increase the upper limit of the service voltage of the battery cell.

As shown in Examples 21 to 23, the total amount of the lithium ions and the sodium ions used for doping is increased with a corresponding increase in the amount of the lithium ions, helping to further improve the energy density and cycling performance of the battery cell.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode material, **characterized in that** the positive electrode material comprises a layered lithium-containing metal oxide, and the layered lithium-containing metal oxide is represented by a general formula LiₐLₓNi_{b}Co_{c}Mn_{d}M_{(1-b-c-d)}O_{c}N_{f}, wherein an L ion is a cation having a radius larger than a radius of a Li ion, M comprises at least one of Mg, Zr, Al, B, Ta, Mo, W, Nb, Sb, and La, and N comprises at least one of F, S, and P, wherein 0<a<2, 0≤b<1, 0≤c<1, 0≤d<1, 0<b+c+d≤1, 0<e≤2, 0≤f<2, and 0<x≤0.8.

2. The positive electrode material according to claim 1, **characterized in that** 0.001≤x≤0.5, optionally, 0.001≤x≤0.1.

3. The positive electrode material according to claim 1 or 2, **characterized in that** 0<c<0.5.

4. The positive electrode material according to any one of claims 1 to 3, **characterized in that** 0.3≤b≤0.96.

5. The positive electrode material according to any one of claims 1 to 4, **characterized in that** 0<d≤0.3.

6. The positive electrode material according to any one of claims 1 to 5, **characterized in that** the L ions occupy at least part of lithium sites in the layered lithium-containing metal oxide, and sites of the Li ions in the layered lithium-containing metal oxide are the lithium sites.

7. The positive electrode material according to any one of claims 1 to 6, **characterized in that** an element of the L ion comprises at least one of an alkali metal element, an alkaline earth metal element, a transition metal element, and another main-group metal element, excluding the lithium element.

8. The positive electrode material according to claim 7, **characterized in that** the alkali metal element comprises at least one of Na, K, Rb, and Cs;
the alkaline earth metal element comprises at least one of Mg, Ca, and Sr;
the transition metal element comprises Y; and
the another main-group metal element comprises Bi.

9. The positive electrode material according to any one of claims 1 to 8, **characterized in that** a service voltage V of the positive electrode material satisfies V=kx, wherein 0<k<100.

10. The positive electrode material according to any one of claims 1 to 9, **characterized in that** a Poisson's ratio S of the positive electrode material is less than 0.

11. The positive electrode material according to any one of claims 1 to 10, charac terized in that the Poisson's ratio S of the positive electrode material satisfies -2<S<0, optionally, -0.2≤S≤-0.05.

12. The positive electrode material according to claim 11, **characterized in that** the service voltage V of the positive electrode material satisfies V=-TS, wherein 0<T<100.

13. A positive electrode plate, **characterized by** comprising the positive electrode material according to any one of claims 1 to 12.

14. A battery cell, **characterized by** comprising the positive electrode plate according to claim 13.

15. The battery cell according to claim 14, **characterized in that** a service voltage of the battery cell is 2 V to 5 V, optionally, 4.4 V to 5V.

16. A battery, **characterized by** comprising the battery cell according to claim 14 or 15.

17. An electric apparatus, **characterized by** comprising the battery according to claim 16.
